# FASCICULE DE BREVET EUROPEEN

(11) **EP 3 248 247 B1**
(45) Date de publication et mention de la délivrance du brevet: **03.05.2023**
(21) Numéro de dépôt: 16703271.3
(22) Date de dépôt: 20.01.2016
(51) Int. Cl.: H01R 13/639, H01R 13/187

(54) **CONNECTEUR DOTÉ D'UNE PIÈCE DE VERROUILLAGE ET PROCÉDÉ DE MISE EN OEUVRE DU CONNECTEUR**
VERBINDER MIT EINEM VERRIEGELUNGSTEIL UND VERFAHREN ZUR IMPLEMENTIERUNG DES VERBINDERS
CONNECTOR EQUIPPED WITH A LOCKING PART AND METHOD OF IMPLEMENTING THE CONNECTOR

(30) Priorité: 20.01.2015 US 201562105318 P
(43) Date de publication de la demande: 29.11.2017
(73) Titulaire: Safran Electrical Components UK Limited, Slough SL1 4RY (GB)
(72) Inventeur: COMBEROUSSE, Matthieu, Slough SL1 5DJ (GB)
(74) Mandataire: Casalonga
(86) Numéro de dépôt international: PCT/EP2016/051107
(87) Numéro de publication internationale: WO 2016/116493

(56) Documents cités:
- EP-A1- 0 205 320
- WO-A2-2007/117688
- JP-U- S61 194 274
- US-A- 6 007 360

## Description

L'invention concerne un connecteur électrique comportant une pièce femelle et une pièce mâle s'engageant dans la pièce femelle, et doté de moyens de verrouillage empêchant tout extrait de la pièce mâle hors de la pièce femelle.

L'invention concerne un connecteur électrique pour assurer une liaison mécanique et électrique. Une application est par exemple le domaine de l'aéronautique, sans toutefois y être limitée. Le document JPS61194274U divulgue un connecteur électrique correspondant au préambule de la revendication 1.

On peut se référer au document WO 2007/117688 - A2 (Parker-Hannifin Corporation) qui décrit un couplage par connexion comprenant une partie femelle et une partie mâle pouvant être insérée de manière télescopique dans la partie femelle.

L'une des solutions usuelles employée dans les connecteurs en particulier électriques est de faire coopérer mécaniquement deux pièces, l'une femelle, l'autre mâle, les pièces étant conçues pour que la connexion électrique soit effective après engagement de la pièce mâle dans la pièce femelle. Cette solution est rapide de mise en oeuvre, la coopération mécanique engendrant la connexion électrique. Pour s'assurer que la pièce mâle est correctement engagée et qu'elle ne peut être extraite intempestivement, le connecteur peut en outre comprendre des moyens de verrouillage, sur lesquels il est nécessaire d'agir lorsqu'une déconnexion mécanique et donc électrique est requise.

Dans certaines applications, il est souhaité de pouvoir aisément repérer que les moyens de verrouillage sont effectifs.

L'invention a donc pour but de procurer un connecteur électrique dont les moyens de verrouillage lorsque les pièces mâle et femelle coopèrent pour assurer une liaison mécanique et électrique, puissent être identifiables visuellement afin de garantir la position verrouillée du connecteur, et soient en outre de mise en oeuvre simple et rapide. Selon l'invention, le connecteur électrique comporte au moins une pièce femelle et au moins une pièce mâle s'engageant dans la pièce femelle, et des moyens de verrouillage empêchant tout extrait intempestif (ou indésirable) de la pièce mâle hors de la pièce femelle. Les moyens de verrouillage comprennent au moins une pièce de verrouillage amovible, agencée en interface entre la pièce mâle et la pièce femelle, et les pièces mâle et femelle comportent des moyens de retenue mécanique par coopération mutuelle.

La pièce de verrouillage est positionnée sur la pièce mâle avant le début de l'introduction de la pièce mâle dans la pièce femelle, la pièce mâle étant introduite dans un logement intérieur de la pièce femelle jusqu'à la coopération mutuelle des moyens de retenue, le désengagement mutuel desdits moyens de retenue n'étant rendu possible qu'après retrait de la pièce de verrouillage, la pièce femelle et la pièce mâle coopérant pour leur assemblage par poussée, et pour leur désassemblage par poussée-traction. Les moyens de retenue par coopération mutuelle comportent d'une part au moins une bague logée dans un évidemment périphérique de la paroi interne du logement intérieur de la pièce femelle et en saillie par rapport à ladite paroi interne, ladite bague étant escamotable dans l'épaisseur de ladite paroi interne et présentant une génératrice intérieure dont la section se rétrécit depuis le côté proche de l'entrée du logement intérieur vers le fond opposé, et d'autre part une gorge périphérique agencée sur le corps de la pièce mâle et destinée à coopérer avec la bague lors de l'insertion de la pièce mâle dans la pièce femelle, la pièce mâle comportant un anneau disposé autour de ladite gorge et libre en translation sur la largeur de la gorge.

De préférence, la pièce de verrouillage amovible est détachable du connecteur par traction, en particulier par un seul geste de traction.

Par conséquent, la pièce de verrouillage permet en étant positionnée en interface d'empêcher tout désassemblage de la pièce de connexion. Elle garantit visuellement que le verrouillage est opérationnel et que les pièces mâle et femelle ne peuvent être désassemblées intempestivement.

La pièce de verrouillage est une pièce d'interface servant d'entretoise entre la pièce mâle et la pièce femelle pour ménager un espace extérieur entre la pièce mâle et la pièce femelle lorsque la pièce mâle est en position maintenue dans la pièce femelle et que la pièce de verrouillage est ôtée. Cet espace correspond à une partie de la course de poursuite d'introduction de la pièce mâle dans la pièce femelle, rendue possible après retrait de la pièce de verrouillage. Selon une caractéristique, la pièce de verrouillage est montée autour de la pièce mâle, en présentant une forme annulaire. Le terme annulaire s'entend par le fait que la pièce de verrouillage entoure la pièce mâle et maintenue par contact intime autour d'elle.

Avantageusement, la pièce mâle comporte un corps longiligne présentant une extrémité libre destinée à être introduite dans la pièce femelle, et une extrémité proximale doté d'un épaulement, la pièce de verrouillage étant disposée autour du corps longiligne et mise en butée contre l'épaulement.

En position d'assemblage de la pièce mâle avec la pièce femelle, la pièce de verrouillage est prise en sandwich entre l'épaulement de la pièce mâle et le chant périphérique de la pièce femelle considéré autour de l'ouverture/l'entrée de la pièce femelle.

La pièce est une pièce clipsable. Elle n'est pas forcément associée à la pièce mâle par clipsage (par poussée élastique) ; elle l'est de préférence par translation en étant insérée autour de l'extrémité libre de la pièce mâle et glissée jusqu'à la partie proximale du corps. En revanche, elle est dissociée de la pièce mâle par traction élastique.

La pièce de verrouillage est flexible, en particulier flexible et de forme annulaire en présentant une circonférence partiellement ouverte pour assurer son détachement par traction.

La pièce de verrouillage présente donc un orifice de passage pour le corps de la partie mâle du connecteur et est partiellement fermée sur sa circonférence pour assurer son maintien sur la pièce mâle tout en pouvant être dégagée par traction dans une direction perpendiculaire à l'axe longitudinal du corps longiligne de la pièce mâle.

Le matériau de la pièce de verrouillage présente des propriétés élastiques et répondant aux contraintes de l'aéronautique. A titre d'exemples nullement limitatifs, le matériau est choisi parmi des polymères tels que polyester, polycarbonate, polysulfone, polyaryléthercétone (PAEK), imides notamment polyétherimide (PEI), etc., ou parmi des matières composites, ou encore parmi des matériaux métalliques flexibles recouverts d'un revêtement électriquement isolant.

La pièce de verrouillage comporte une section interne creuse de géométrie et de dimension adaptées à la géométrie externe et à la dimension de la partie du corps de la pièce mâle sur laquelle elle est rapportée. La section peut être circulaire, polygonale, complexe aux formes variées. La dimension de la section interne est adaptée au type de connecteur, elle peut par exemple être comprise entre 2 mm et 30 mm. La pièce de verrouillage comporte un moyen de préhension facilitant sa prise en main, en particulier ledit moyen de préhension formant une patte de direction radiale en saillie vers l'extérieur de la circonférence annulaire.

Les pièces femelle et mâle comportent des moyens de retenue mécanique coopérant mutuellement. Les pièces femelle et mâle peuvent comporter des moyens de connexion électrique mutuelle.

La pièce femelle et la pièce mâle coopèrent pour leur assemblage par poussée, et pour leur désassemblage par poussée-traction.

L'élément en saillie de retenue se présente de préférence sous la forme d'une bague logée dans la paroi de la pièce femelle et présentant une génératrice intérieure à pan incliné, l'inclinaison étant convergente depuis la paroi de la pièce femelle en direction de l'intérieur du logement vers l'opposé de son entrée. La génératrice intérieure de la bague définit une section se rétrécissant depuis le côté proche de l'entrée du logement vers le fond opposé.

Pour assurer la mobilité de la bague entre une position en partie sortie/en saillie de la paroi interne du logement et une position rentrée dans la paroi, la bague est en un matériau flexible (métallique ou matière plastique). La bague est ainsi élastique pour être apte à s'écarter lors de l'introduction du corps de la partie mâle.

Selon l'invention, la gorge périphérique de la pièce mâle comporte un anneau (coulissant) disposé autour de ladite gorge et libre en translation sur la largeur de la gorge. On entend par le qualificatif « largeur» dans la suite de la description, la dimension s'étendant dans la direction de l'axe longitudinal du corps longiligne de la pièce mâle destinée à être introduite dans la pièce femelle. La largeur de l'anneau est inférieure à la largeur de la gorge périphérique pour permettre sa translation. L'anneau coopère avec la gorge sans dépasser radialement du corps de la pièce mâle.

La pièce femelle comporte un logement d'accueil pour la pièce mâle comprenant une entrée depuis laquelle est destinée à être introduite la pièce mâle, un espace libre étant réservé entre la pièce mâle et l'extrémité du logement opposée à l'entrée du logement lorsque la pièce mâle est en position assemblée et maintenue dans le logement. L'espace réservé permet de pousser davantage la partie mâle dans le logement lors de l'extraction de la pièce mâle par poussée-traction. L'invention est également relative à un procédé de mise en oeuvre du connecteur électrique de l'invention, caractérisé en ce que la pièce de verrouillage est positionnée sur la pièce mâle avant l'introduction totale de la pièce mâle, de préférence préalablement avant le début de l'introduction, et la pièce mâle est introduite dans la pièce femelle jusqu'à la coopération mutuelle des moyens de retenue.

Les étapes de désassemblage des pièces femelle et mâle comportent le retrait de la pièce de verrouillage hors du connecteur, de préférence par un seul geste de traction, le désengagement des moyens de retenue, de préférence par une double action de poussée-traction, et l'extraction de la pièce mâle hors de la pièce femelle en particulier par traction.

La pièce de verrouillage peut être ôtée au moyen d'un outil ou de la main si elle présente une partie ergonomique à sa préhension.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue en perspective du connecteur en position assemblée et verrouillée des pièces mâle et femelle
- La figure 2 est une en perspective éclatée du connecteur ;
- La figure 3 est une vue en coupe longitudinale de la pièce mâle ;
- La figure 4 est une vue en coupe de la figure 3, la pièce mâle étant dotée de la pièce de verrouillage ;
- La figure 5 est une vue en coupe longitudinale de la pièce femelle, la pièce femelle étant en outre dotée de contacts électriques ;
- La figure 6 est une vue de la pièce femelle de la figure 5 dans laquelle est verrouillée la pièce mâle de la figure 4 ; - La figure 7 est une vue en coupe d'un connecteur non couvert par les revendications, sans contact électrique et en position assemblée et verrouillée ;
- Les figures 8a à 8c montrent des vues en coupe des étapes d'assemblage de la pièce mâle dans la pièce femelle du connecteur de la figure 7, la figure 8c correspondant au connecteur en position verrouillée de la figure 7 ;
- Les figures 9a à 9c sont des vues en coupe des étapes de désassemblage de la pièce mâle de la pièce femelle, à partir du connecteur de la figure 8c. Le dispositif illustré sur les figures est un connecteur de l'invention comprenant une pièce femelle 2 et une pièce mâle 3 coopérant avec la pièce femelle, et doté d'une pièce de verrouillage 4 permettant de visualiser l'assemblage mécanique des deux pièces et garantissant le verrouillage, le désassemblage des deux pièces ne pouvant se faire qu'en ayant retiré la pièce de verrouillage.

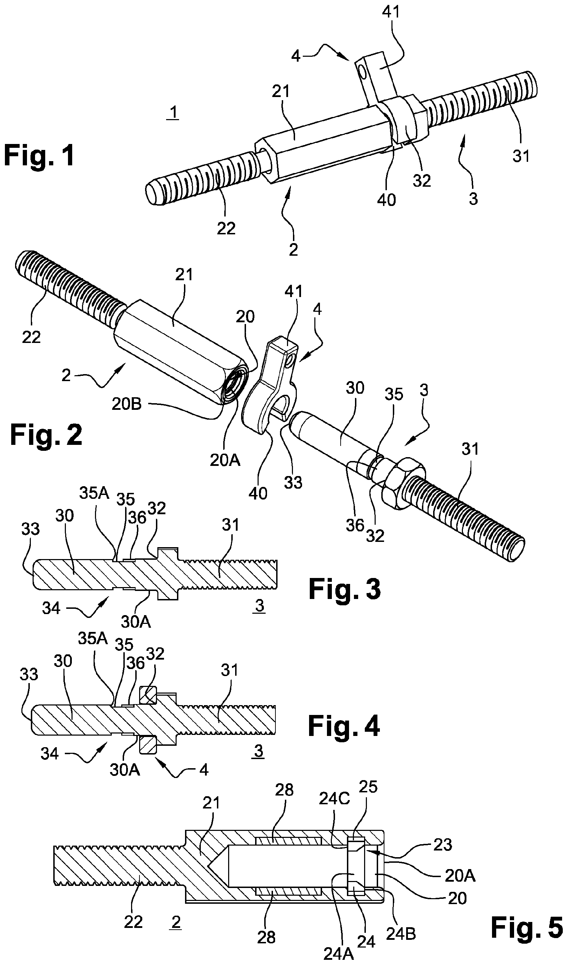

Les figures 3 à 6 illustrent un connecteur de l'invention à fonction de connexion électrique. La fonction de connexion/liaison électrique est assurée lorsque le connecteur est mécaniquement assemblé, c'est-à-dire lorsque la pièce mâle 3 est logée et maintenue dans la pièce femelle 2, les deux pièces présentant des surface de liaison électrique.

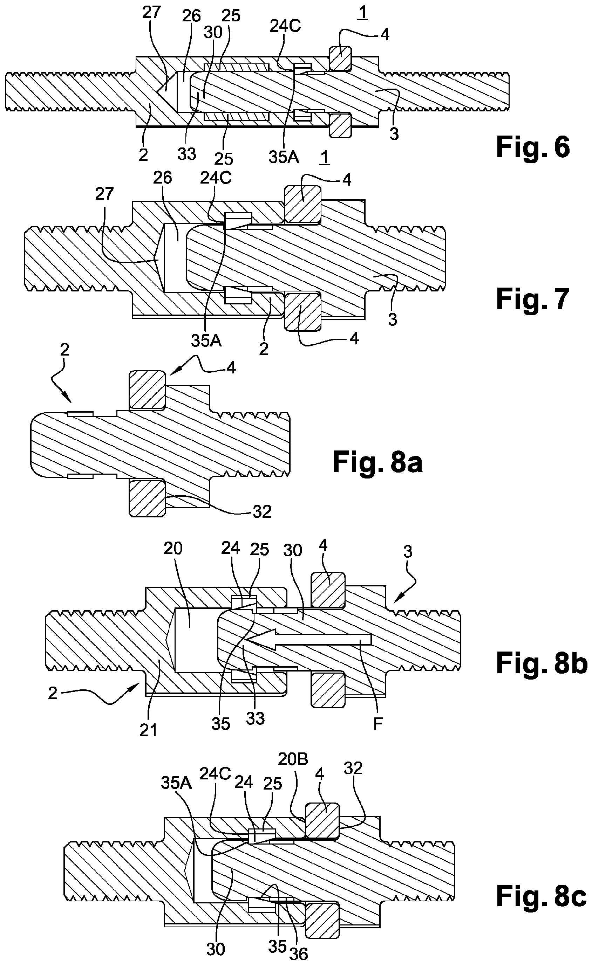

La figure 7 illustre un connecteur non couvert par les revendications sans fonction de liaison électrique. En effet, dans d'autres applications, un connecteur peut nécessiter de relier mécaniquement deux éléments sans imposer de liaison électrique. Le système de retenue mécanique et de verrouillage du connecteur est le même indépendamment de la présence ou non d'une liaison électrique. C'est ce système qui est décrit ci-après. Le connecteur est destiné à relier deux éléments non illustrés, de part et d'autre de chacune des pièces respectivement femelle et mâle.

En regard des figures 1 et 2, le connecteur comporte la pièce femelle 2 dans laquelle est engagée la pièce mâle 3 et entre lesquelles est disposée en interface la pièce de verrouillage 4.

Les formes extérieures des pièces sont des exemples de réalisation nullement limitatifs. Chaque pièce mâle/femelle du connecteur selon sa destination aura une configuration adaptée à sa liaison avec l'élément auquel il est destiné. Les dimensions du connecteur sont également adaptées à sa destination et son utilisation.

La pièce femelle 2 comporte un logement d'accueil 20, tandis que la pièce mâle 3 comporte un corps 30, ici oblong, adapté à être reçu dans le logement 20. Les dimensions et la forme géométrique du logement et du corps peuvent être diverses. La forme du corps mâle est ici cylindrique à base circulaire mais pourrait par exemple être à section polygonale, le logement présentant une forme complémentaire d'accueil.

Le connecteur décrit ci-après ne présente qu'un seul corps mâle 30 et qu'un seul logement d'accueil femelle 20 pour le corps mâle. Toutefois, le système de retenue et verrouillage de l'invention est applicable à un connecteur qui disposerait de plusieurs corps mâle et de plusieurs logements femelles associés, un système de verrouillage étant prévu pour chaque couple corps mâle-logement femelle.

La pièce mâle 30 comporte le corps 30 de préférence oblong et une partie opposée colinéaire 31 destinée à être associée à un élément à relier non illustré. La partie 31 est ici filetée à titre d'exemple nullement limitatif. En outre, la pièce mâle comporte un épaulement 32 délimitant le corps 30 par rapport à la partie 31. L'extrémité libre 33 du corps 30, opposée à l'épaulement 32, est destinée à être engagée dans la pièce femelle.

De plus, la pièce mâle comporte des moyens de retenue 34 destinés à coopérer mutuellement avec des moyens de retenue 24 associés à la pièce femelle 2 pour assurer le maintien mécanique des deux pièces une fois associées.

Les moyens de retenue 34, 24 des pièces mâle et femelle sont ci-après décrits, en référence aux figures 3 et 4, à titre d'exemple préférentiel mais néanmoins nullement limitatif. Les moyens de retenue des pièces mâle et femelle constituent avantageusement un système de retenue de type pousser-tirer.

Les moyens de retenue 34 de la pièce mâle 3 sont agencés entre l'extrémité libre 33 et l'épaulement 32. Ils comprennent une gorge périphérique 35 agencée donc dans l'épaisseur du corps 30 et selon son pourtour, et un anneau 36 emmanché autour et sur une partie de largeur de la gorge 35 tout en étant libre en translation longitudinale selon la largeur de la gorge. L'anneau coulissant 36 entoure la gorge sans faire saillie radialement de la paroi externe 30A du corps 30.

Lorsque le connecteur des figures 2 à 4 est utilisé en tant que connecteur électrique (assurant donc une connexion mécanique et électrique), le corps 30 et la partie 31 de la pièce mâle 3 sont en un matériau métallique par exemple un alliage à base de cuivre.

Même si la partie mâle 3 du connecteur est en un matériau électriquement conducteur, la partie mâle peut néanmoins être utilisée pour une connexion exclusivement mécanique.

Si le connecteur a vocation à être exclusivement utilisé pour une connexion mécanique (et non électrique), le corps de la partie mâle peut être constitué d'un autre matériau qu'un matériau électriquement conducteur, il est par exemple en matière plastique.

L'anneau 36 n'est pas forcément métallique. Il est par exemple en matière plastique telle qu'en polyétheréthercétone (PEEK) ou polyoxyméthylène (POM).

En regard des figures 2 et 5, la pièce femelle 2 comporte le logement 20 agencé à l'intérieur d'un corps 21 et doté d'une ouverture 20A, et une partie de liaison 22 s'étendant à l'opposé de l'ouverture 20A et destinée à être associée à un élément à connecter non illustré. La partie de liaison 22 est ici filetée à titre d'exemple nullement limitatif.

La pièce femelle 2 comporte des moyens de retenue 23 destinés à coopérer avec les moyens complémentaires de retenue 34 de la pièce mâle.

Les moyens de retenue 23 consistent en une bague 24 élastique logée dans un évidement périphérique 25 de la paroi du corps 21 de la pièce femelle.

La bague élastique 24 est en un matériau métallique ou en matière plastique telle qu'en polyétheréthercétone (PEEK) ou polyoxyméthylène (POM).

La bague 24 est apte à adopter deux positions, à savoir une position de repos pour laquelle elle fait saillie dans le logement 20 de la pièce (figure 5) et une position escamotée (figure 8b) pour laquelle elle est déformée/dilatée/agrandie et occupe la totalité de l'évidement périphérique 25 lors de l'insertion de la pièce mâle.

La bague 24 comporte un orifice de passage 24A destiné à être traversé par le corps 30 de la pièce mâle 3.

L'orifice 24A présente un profil intérieur dont la section varie de manière décroissante depuis le bord 24B frontal situé du côté de l'ouverture 20A jusqu'au bord opposé arrière 24C. Ainsi, la surface intérieure de la bague 24 est conique. La génératrice intérieure de la bague présente une inclinaison convergente depuis le bord 24B destiné à coopérer en premier avec le corps 30 de la pièce mâle, en direction du bord opposé 24C.

Une fois le corps 30 de la pièce mâle introduit au travers de la bague 24, tel qu'il sera explicité plus loin, la bague 24 est destinée à coopérer par engagement avec la gorge périphérique 35 (figures 6, 7 et 8c), le bord 24C venant en butée contre l'un des pans latéraux 35A de la gorge 35. Cette coopération mutuelle assure de retenir la pièce mâle dans la pièce femelle.

Le logement 20 présente un volume adapté pour loger le corps 30 et ménager un espace libre 26 (figures 6 et 7) entre l'extrémité libre 33 du corps 30 lorsque ce dernier est en position retenue dans le logement, et le fond 27 du logement opposé à l'ouverture 20A. Cet espace 26 présente une largeur au moins égale à la moitié de la largeur de l'anneau 36 de la pièce mâle 3.

Lorsque le connecteur 1 est un connecteur électrique, la pièce femelle 2 est faite d'un matériau métallique, le corps 21 et la partie 22 étant métallique. De plus, pour garantir une continuité électrique entre le corps 30 et le corps 21 au niveau du logement 20, la pièce femelle 2 comporte (figure 5 et 6) des contacts électriques 28 agencés dans le logement 20 contre la paroi interne du logement 20 du corps 21 et destinés à être en contact intime avec le corps 30 de la pièce mâle (du côté de l'extrémité libre 33) une fois engagée et retenue.

Dans l'exemple de la figure 7, le connecteur n'étant pas un connecteur de liaison électrique, le logement 20 est dépourvu de contacts électriques.

Enfin, le connecteur 1 de l'invention comporte la pièce de verrouillage 4. Cette pièce de verrouillage permet une fois la pièce mâle 3 engagée dans la pièce femelle 2 et maintenue dans celle-ci grâce aux moyens de retenue 24 et 34 de repérer visuellement que les pièces mâle et femelle sont enclenchées et d'empêcher toute dissociation intempestive des deux pièces.

La pièce de verrouillage 4 est de préférence mise en place sur la partie mâle 3 avant l'introduction de cette dernière dans la partie femelle.

La pièce de verrouillage 4 est une pièce d'interface servant d'entretoise entre la pièce mâle 3 et la pièce femelle 2.

La pièce de verrouillage 4 comporte une partie formant un anneau, au moins sensiblement en U (figures 1 et 2), de manière à coopérer avec le corps 30.

Le terme anneau pour la pièce de verrouillage 4 ne s'entend pas d'une forme nécessairement circulaire. La pièce de verrouillage entoure le corps 30 et comporte une section interne adaptée à la forme extérieure du corps 30.

Dans la variante préférée de l'invention, la pièce de verrouillage 4 est une pièce en matériau flexible et présente la forme d'un anneau ouvert sur une partie 40 de sa périphérie. Elle est flexible et est en partie ouverte pour permettre son découplage du corps 30.

La pièce de verrouillage 4 est destinée à être serrée autour du corps 30 de la pièce mâle par contact avec la paroi 30A tout en butant contre l'épaulement 32 (figure 4). Elle est disposée entre l'épaulement 32 et la gorge périphérique 35.

La pièce de verrouillage 4 est associée au corps 30 de la pièce mâle à la manière d'une pince.

La propriété élastique du matériau formant l'anneau ouvert permet aisément et rapidement de la retirer du corps 30 comme une pièce de clipsage que l'on souhaite désaccoupler.

Toutefois, d'autres variantes sont envisageables. Par exemple la pièce de verrouillage pourrait être faite de deux parties définissant une ligne fermée (et non en partie ouverte) et couplées entre elles d'une part par une charnière et d'autre part par un moyen de fixation rapide du type clipsage ou tout système de liaison amovible mais fiable des deux extrémités. Dans un autre exemple encore, la pièce de verrouillage pourrait être constituée de deux demi-coquilles qui s'assemblent de manière amovible par exemple par clipsage et formant une ligne fermée lorsqu'elles sont assemblées.

Avantageusement, la pièce de verrouillage 4 comporte une partie de préhension 41 radiale, en saillie de la partie en anneau ouvert 40 de ladite pièce 4 et du reste du connecteur pour être aisément prise en main en vue d'être tirée.

La mise en oeuvre du connecteur de l'invention est à présent décrite en regard des figures 8a à 9c, le connecteur étant celui de la figure 7.

Avant engagement de la pièce mâle 3 dans la pièce femelle 2, l'utilisateur met en place l'anneau ouvert 40 de la pièce de verrouillage 4 sur la pièce mâle (figure 8a), par exemple en l'enfilant autour du corps 30 jusqu'à venir en butée contre l'épaulement 32. Elle pourrait aussi être positionnée par clipsage.

L'assemblage des deux pièces femelle 2 et mâle 3 du connecteur se fait de la manière suivante en regard des figures 8a à 8c.

En regard de la figure 8b, une fois la pièce de verrouillage 4 en place, on introduit la pièce mâle 3 en translation selon la flèche F dans le logement 20. L'extrémité 33 de la pièce mâle bute contre la bague 24 de la pièce femelle 2 ; du fait de l'inclinaison convergente du profil intérieur de la bague 24, en poursuivant la poussée selon la flèche F, le corps 30 continue sa progression repoussant la bague 24 dans l'évidement 25.

La poussée se poursuit jusqu'à ce que la gorge 35 de la pièce mâle (figure 8c) rencontre la bague 24 qui, en revenant donc par élasticité à forme d'origine, se place dans la gorge sans pouvoir en sortir. L'assemblage de la pièce mâle avec la pièce femelle est alors réalisé. La pièce de verrouillage 4 est ainsi prise en sandwich entre l'épaulement 32 de la pièce mâle 3 et l'extrémité libre ou chant 20B de la pièce femelle 2 coplanaire avec l'ouverture 20A.

Le connecteur est ainsi assemblé et verrouillé. Toute traction dans le sens opposé de la flèche F est impossible, le pan latéral 35A de la gorge 35 butant contre le bord 24C de la bague. En outre, comme le système de retenue est un système de type pousser-tirer, et qu'il convient pour extraire le connecteur mâle effectuer d'abord une action de poussée, la présence de l'entretoise obtenue par la pièce de verrouillage 4 rend l'action impossible.

La dissociation des deux pièces du connecteur se fait de la manière suivante.

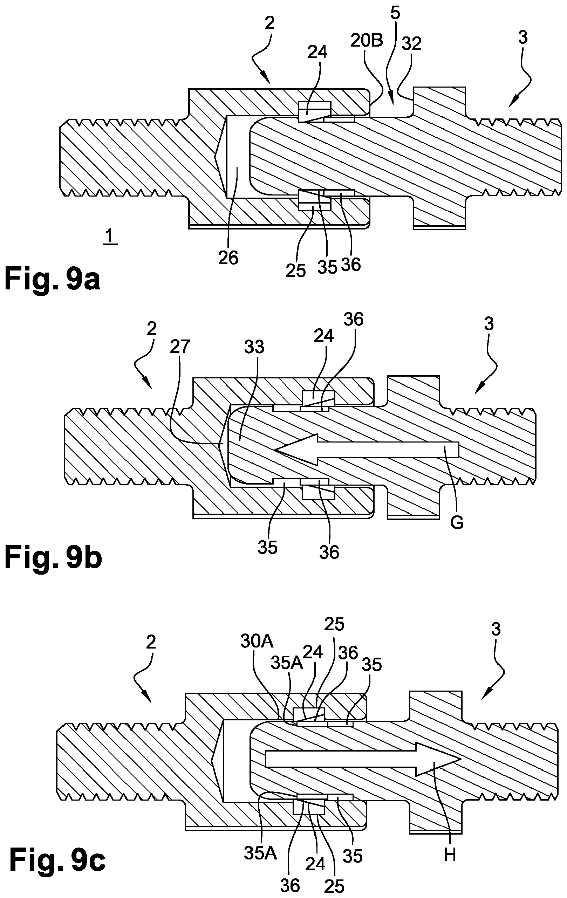

L'utilisateur tire sur la partie en saillie 41 de la pièce de verrouillage 4 qui provoque l'écartement des deux pattes de l'anneau ouvert en 40, et donc permet le dégagement de la pièce 4 du connecteur 1. Comme visible sur la figure 9a, la pièce mâle 3 est toujours maintenue retenue dans la pièce femelle 2, un espace libre 5 extérieur étant ménagé entre les deux pièces mâle et femelle à la place de la pièce de verrouillage.

La pièce de verrouillage 4 étant retirée, il est alors possible de pousser sur la pièce mâle, l'entretoise 4 laissant place à un espace extérieur entre les deux pièces dont la largeur est au moins égale à la partie de la course nécessaire à l'introduction supplémentaire de la partie mâle dans la partie femelle. En poussant en translation selon la flèche G, au regard de la figure 9b, le corps 30 peut poursuivre son introduction grâce à l'anneau 36 logé dans la gorge 35, l'anneau 36 poussant à son tour sur le profil intérieur incliné de la bague 24 de la pièce femelle. L'espace réservé 26 dans le logement 20 permet l'enfoncement du corps 30. Lorsque l'extrémité 33 du corps 30 arrive en butée contre le fond 27 du logement 20, l'utilisateur exerce une action de traction selon la flèche H de la figure 9c dans le sens opposé à la poussée.

L'extraction du corps 30 est rendue possible par la mobilité en translation de l'anneau coulissant 36 dans la gorge 35 de la pièce mâle 3 :
- après avoir enfoncé complètement la pièce mâle 3 dans la pièce femelle 2 (figure 9b), l'anneau coulissant 36 de la pièce mâle se trouve positionné en vis-à-vis de la bague élastique 24 de la pièce femelle ;
- en tirant sur la pièce mâle 3, l'anneau 36 qui est libre en translation coulisse concomitamment dans la gorge 35 en restant continuellement en regard de la bague 24 (figure 9c) qui est ainsi maintenue écartée dans l'évidement 25 de la paroi ;
- l'anneau 36 en coulissant vient en butée contre le pan latéral 35A de la gorge (figure 9c) puis en poursuivant la traction, la bague 24 rencontre alors la surface externe 30A du corps 30, rendant possible le coulissement et l'extraction totale du corps 30 hors du logement 20.

## Revendications

1. Connecteur (1) électrique comportant au moins une pièce femelle (2) et au moins une pièce mâle (3) comportant un corps (30) s'engageant dans un logement (20) de la pièce femelle, et des moyens de verrouillage (4) empêchant tout extrait de la pièce mâle hors de la pièce femelle, les moyens de verrouillage comprenant au moins une pièce de verrouillage (4) amovible, agencée en interface entre la pièce mâle (3) et la pièce femelle (2), et les pièces mâle et femelle comportent des moyens de retenue (34, 24) par coopération mutuelle, **caractérisé en ce que**
la pièce de verrouillage (4) est positionnable sur la pièce mâle (3) avant le début de l'introduction totale de la pièce mâle (3) dans la pièce femelle (2), la pièce mâle (3) étant introduite dans la pièce femelle (2) jusqu'à la coopération mutuelle des moyens de retenue (34, 24), le désengagement mutuel desdits moyens de retenue (34, 24) n'étant rendu possible qu'après retrait de la pièce de verrouillage (4), la pièce femelle (2) et la pièce mâle (3) coopérant pour leur assemblage par poussée, et pour leur désassemblage par poussée-traction et **en ce que**
les moyens de retenue (34, 24) par coopération mutuelle comportent :
d'une part au moins une bague (24) élastique logée dans un évidement (25) de la paroi interne du logement (20) de la pièce femelle (2) et en saillie par rapport à ladite paroi interne, ladite bague (24) étant escamotable dans l'épaisseur de ladite paroi interne et présentant une génératrice intérieure dont la section se rétrécit depuis le côté proche de l'entrée du logement (20) vers le fond opposé, la surface intérieure de ladite bague (24) étant conique et apte à adopter deux positions, à savoir une première position de repos dans laquelle elle fait saillie dans le logement intérieur (20) de la pièce femelle (2), et une deuxième position escamotée dans laquelle la bague (24) occupe la totalité de l'évidemment (25) de la paroi interne de la pièce femelle (2) lors de l'insertion de la pièce mâle (3) dans la pièce femelle (2) ; et
d'autre part une gorge périphérique (35) agencée sur le corps (30) de la pièce mâle (3) et destinée à coopérer avec la bague (24) lors de l'insertion de la pièce mâle (3) dans la pièce femelle (2), la gorge périphérique (35) de la pièce mâle (3) comportant un anneau (36) disposé autour de ladite gorge (35) sans faire saillie radialement de la surface externe (30A) du corps (30), ledit anneau (36) étant libre en translation sur la largeur de la gorge (35), et **en ce que** la pièce femelle (2) comporte des contacts électriques (28) agencés dans le logement intérieur (20) contre la paroi interne du logement (20) et destinés à être en contact intime avec le corps (30) de la pièce mâle (3) du côté de son extrémité libre (33) une fois engagée et retenue.

2. Connecteur selon la revendication 1, **caractérisé en ce que** la pièce de verrouillage (4) amovible est prise en sandwich entre les pièces mâle et femelle (2, 3), et est de dissociation rapide, notamment détachable du connecteur par traction, en particulier par un seul geste de traction.

3. Connecteur selon la revendication 1 ou 2, **caractérisé en ce que** la pièce de verrouillage (4) est montée autour de la pièce mâle (3), en présentant une forme annulaire, de préférence la pièce de verrouillage (4) est flexible, en particulier flexible et de forme annulaire en présentant une circonférence partiellement ouverte pour assurer son détachement par traction.

4. Connecteur selon l'une quelconque des revendications précédentes, **caractérisé en ce que** la pièce de verrouillage (4) comporte une section interne creuse de géométrie et de dimension adaptée à la géométrie externe et à la dimension de la partie du corps (30) de la pièce mâle (3) sur laquelle elle est rapportée.

5. Connecteur selon l'une quelconque des revendications précédentes, **caractérisé en ce que** la pièce de verrouillage (4) comporte un moyen de préhension (41), en particulier la pièce de verrouillage (4) est de forme annulaire et comporte en tant que moyen de préhension une patte de direction radiale en saillie vers l'extérieur de la circonférence annulaire.

6. Connecteur selon l'une quelconque des revendications précédentes, **caractérisé en ce que** la pièce de verrouillage (4) est une pièce servant d'entretoise entre la pièce mâle (3) et la pièce femelle (2) pour ménager un espace extérieur entre la pièce mâle et la pièce femelle lorsque la pièce mâle est en position maintenue dans la pièce femelle et que la pièce de verrouillage est ôtée.

7. Connecteur selon l'une quelconque des revendications précédentes, **caractérisé en ce que** les pièces femelle (2) et mâle (3) comportent des moyens de connexion électrique mutuelle.

8. Connecteur selon l'une quelconque des revendications précédentes, **caractérisé en ce que** la bague (24) est réalisée en un matériau flexible apte à s'écarter.

9. Connecteur selon l'une quelconque des revendications précédentes, **caractérisé en ce que** le logement (20) pour la pièce mâle comprend une entrée depuis laquelle est destinée à être introduite la pièce mâle (3), un espace libre (26) étant réservé entre la pièce mâle et l'extrémité du logement opposée à l'entrée du logement lorsque la pièce mâle est en position assemblée et maintenue dans le logement.

10. Procédé de mise en oeuvre d'un connecteur électrique selon l'une quelconque des revendications précédentes, **caractérisé en ce que** les étapes d'assemblage des pièces femelle et mâle (2, 3) comportent:
- le positionnement de la pièce de verrouillage (4) sur la pièce mâle (3) avant l'introduction totale de ladite pièce mâle (3) dans la pièce femelle (2),
- l'introduction de la pièce mâle (3) dans la pièce femelle (2) jusqu'à la coopération mutuelle des moyens de retenue,
- l'aboutement de l'extrémité (33) de la pièce mâle (3)
contre la bague (24) élastique en saillie dans le logement (20) de la pièce femelle (2),
- le déplacement de la bague (24) de la première position de repos dans la deuxième position escamotée par contact entre l'extrémité de la pièce mâle (3) et l'inclinaison convergente du profil intérieur de la bague (24),
- le déplacement de la bague (24) de la deuxième position escamotée dans la première position de repos, la bague (24) étant logée dans la gorge périphérique (35) et **en ce que** les étapes de désassemblage comportent:
- le retrait de la pièce de verrouillage (4) hors du connecteur, de préférence par un seul geste de traction,
- le désengagement des moyens de retenue (34, 24) par une double action de poussée-traction, et
- l'extraction de la pièce mâle (3) hors de la pièce femelle (2) en particulier par traction.

## Patentansprüche

1. Elektrischer Verbinder (1), mindestens ein weibliches Teil (2) und mindestens ein männliches Teil (3) umfassend, einen Körper (30) umfassend, der in einen Sitz (20) des weiblichen Teils eingreift, und Verriegelungsmittel (4), die jegliches Herausziehen des männlichen Teils aus dem weiblichen Teil verhindern, wobei die Verriegelungsmittel mindestens ein abnehmbares Verriegelungsteil (4) beinhalten, das an der Schnittstelle zwischen dem männlichen Teil (3) und dem weiblichen Teil (2) eingerichtet ist, und wobei die männlichen und weiblichen Teile Rückhaltungsmittel (34, 24) durch gegenseitiges Zusammenwirken umfassen, **dadurch gekennzeichnet, dass** das Verriegelungsteil (4) auf dem männlichen Teil (3) positionierbar ist vor dem Beginn der vollständigen Einführung des männlichen Teils (3) in das weibliche Teil (2), wobei das männliche Teil (3) in das weibliche Teil (2) eingeführt wird bis zum gegenseitigen Zusammenwirken der Rückhaltungsmittel (34, 24), wobei das gegenseitige Lösen des Eingriffs der Rückhaltungsmittel (34, 24) erst nach dem Rückzug des Verriegelungsteils (4) möglich ist, wobei das weibliche Teil (2) und das männliche Teil (3) für ihre Montage durch Drücken und für ihre Demontage durch Drücken-Ziehen zusammenwirken, und dadurch, dass die Rückhaltungsmittel (34, 24) durch gegenseitiges Zusammenwirken umfassen:
einerseits mindestens eine elastische Hülse (24), die in einer Aussparung (25) der Innenwand des Sitzes (20) des weiblichen Teils (2) untergebracht ist, und in Bezug auf die Innenwand vorsteht, wobei die Hülse (24) in der Dicke der Innenwand zurückziehbar ist, und eine innere Kante aufweist, deren Querschnitt sich von der Seite nahe dem Eingang des Sitzes (20) zum gegenüberliegenden Boden hin verjüngt, wobei die Innenfläche der Hülse (24) konisch ist und imstande, zwei Positionen einzunehmen, und zwar eine erste Ruheposition, in der sie in den inneren Sitz (20) des weiblichen Teils (2) vorsteht, und eine zweite Rückzugsposition, in der die Hülse (24) die gesamte Aussparung (25) der Innenwand des weiblichen Teils (2) ausfüllt, beim Einführen des männlichen Teils (3) in das weibliche Teil (2); und
andererseits eine Umfangsnut (35), die am Körper (30) des männlichen Teils (3) eingerichtet ist, und zum Zusammenwirken mit der Hülse (24) beim Einführen des männlichen Teils (3) in das weibliche Teil (2) bestimmt ist, wobei die Umfangsnut (35) des männlichen Teils (3) einen Ring (36) umfasst, der um die Nut (35) angeordnet ist, ohne radial von der Außenfläche (30A) des Körpers (30) vorzustehen, wobei der Ring (36) frei ist in Translation über die Breite der Nut (35), und dadurch, dass das weibliche Teil (2) elektrische Kontakte (28) umfasst, die im inneren Sitz (20) gegen die Innenwand des Sitzes (20) eingerichtet sind, und dazu bestimmt sind, in engem Kontakt mit dem Körper (30) des männlichen Teils (3) auf der Seite seines freien Endes (33) zu stehen, wenn es in Eingriff steht und zurückgehalten wird.

2. Verbinder nach Anspruch 1, **dadurch gekennzeichnet, dass** das abnehmbare Verriegelungsteil (4) zwischen den männlichen und weiblichen Teilen (2, 3) eingeklemmt ist, und schnell trennbar ist, namentlich vom Verbinder durch Ziehen ausklinkbar ist, insbesondere durch eine einzige Zugbewegung.

3. Verbinder nach Anspruch 1 oder 2, **dadurch gekennzeichnet, dass** das Verriegelungsteil (4), das eine Ringform aufweist, um das männliche Teil (3) angebracht ist, wobei das Verriegelungsteil (4) vorzugsweise flexibel ist, insbesondere flexibel und ringförmig mit einem teilweise offenen Umfang, um seine Ausklinkung durch Ziehen zu gewährleisten.

4. Verbinder nach einem der vorhergehenden Ansprüche, **dadurch gekennzeichnet, dass** das Verriegelungsteil (4) einen hohlen inneren Abschnitt umfasst, dessen Geometrie und Abmessungen an die äußere Geometrie angepasst sind, und an die Abmessungen des Bereichs des Körper (30) des männlichen Teils (3), auf den er aufgesteckt ist.

5. Verbinder nach einem der vorhergehenden Ansprüche, **dadurch gekennzeichnet, dass** das Verriegelungsteil (4) ein Greifmittel (41) umfasst, insbesondere ist das Verriegelungsteil (4) ringförmig und umfasst in der Eigenschaft eines Greifmittels eine radiale Richtungsnase, die vom Ringumfang nach außen vorsteht.

6. Verbinder nach einem der vorhergehenden Ansprüche, **dadurch gekennzeichnet, dass** das Verriegelungsteil (4) ein Teil ist, das als Abstandshalter zwischen dem männlichen Teil (3) und dem weiblichen Teil (2) dient, um einen äußeren Raum zwischen dem männlichen Teil und dem weiblichen Teil zu schaffen, wenn das männliche Teil in der Halteposition im weiblichen Teil ist und das Verriegelungsteil abgehoben ist.

7. Verbinder nach einem der vorhergehenden Ansprüche, **dadurch gekennzeichnet, dass** das weibliche (2) und das männliche (3) Teil gegenseitige elektrische Anschlussmittel umfassen.

8. Verbinder nach einem der vorhergehenden Ansprüche, **dadurch gekennzeichnet, dass** die Hülse (24) aus einem flexiblen Material besteht, das imstande ist, sich zurückzuziehen.

9. Verbinder nach einem der vorhergehenden Ansprüche, **dadurch gekennzeichnet, dass** der Sitz (20) für das männliche Teil einen Eingang beinhaltet, von dem aus das männliche Teil (3) eingeführt werden soll, wobei ein Freiraum (26) zwischen dem männlichen Teil und dem Ende des Sitzes, das dem Eingang des Sitzes gegenüberliegt, reserviert ist, wenn das männliche Teil in der Montageposition ist und im Sitz gehalten ist.

10. Verfahren zum Einsatz eines elektrischen Verbinders nach einem der vorhergehenden Ansprüche, **dadurch gekennzeichnet, dass** die Schritte zur Montage der weiblichen und männlichen Teile (2, 3) umfassen:
- die Positionierung des Verriegelungsteils (4) auf dem männlichen Teil (3) vor der vollständigen Einführung des männlichen Teils (3) in das weibliche Teil (2),
- die Einführung des männlichen Teils (3) in das weibliche Teil (2) bis zum gegenseitigen Zusammenwirken der Rückhaltungsmittel,
- das Aneinanderfügen des Endes (33) des männlichen Teils (3) gegen die vorstehende elastische Hülse (24) im Sitz (20) des weiblichen Teils (2),
- die Verschiebung der Hülse (24) von der ersten Ruheposition in die zweite Rückzugsposition durch Kontakt zwischen dem Ende des männlichen Teils (3) und der konvergierenden Schräge des inneren Profils der Hülse (24),
- die Verschiebung der Hülse (24) von der zweiten Rückzugsposition in die erste Ruheposition, wobei die Hülse (24) in der Umfangsnut (35) untergebracht ist, und dass die Schritte zur Demontage umfassen:
- den Rückzug des Verriegelungsteils (4) aus dem Verbinder, vorzugsweise mit einer einzigen Zugbewegung,
- das Lösen des Eingriffs der Rückhaltungsmittel (34, 24) durch eine doppelte Drücken-Ziehen-Aktion, und
- die Extraktion des männlichen Teils (3) aus dem weiblichen Teil (2), insbesondere durch Ziehen.

## Claims

1. An electrical connector (1) including at least one female part (2) and at least one male part (3) including a body (30) engaging in a housing (20) of the female part, and locking means (4) preventing any extraction of the male part from the female part, the locking means comprising at least one removable locking part (4), arranged at the interface between the male part (3) and the female part (2), and the male and female parts include mutual cooperation retaining means (34, 24), **characterised in that** the locking part (4) can be positioned on the male part (3) before the start of the total insertion of the male part (3) in the female part (2), the male part (3) being inserted in the female part (2) until the mutual cooperation of the retaining means (34, 24), the mutual disengagement of said retaining means (34, 24) being made possible only after removal of the locking part (4), the female part (2) and the male part (3) cooperating in order to be assembled by pushing, and to be assembled by pushing-pulling and **in that** the mutual cooperation retaining means (34, 24) include:
on the one hand at least one elastic ring (24) housed in a recess (25) of the inner wall of the housing (20) of the female part (2) and projecting relative to said inner wall, said ring (24) being retractable in the thickness of said inner wall and having an internal generatrix whose section narrows from the side close to the inlet of the housing (20) towards the opposite bottom, the inner surface of said ring (24) being conical and capable of adopting two positions, namely a first rest position wherein it projects in the inner housing (20) of the female part (2), and a second retracted position wherein the ring (24) occupies the entire recess (25) of the inner wall of the female part (2) when inserting the male part (3) in the female part (2); and
on the other hand, a peripheral groove (35) arranged on the body (30) of the male part (3) and intended to cooperate with the ring (24) when inserting the male part (3) in the female part (2), the peripheral groove (35) of the male part (3) including a ring (36) disposed around said groove (35) without projecting radially from the external surface (30A) of the body (30), said ring (36) being free in translation over the width of the groove (35), and **in that** the female part (2) includes electrical contacts (28) arranged in the interior housing (20) against the inner wall of the housing (20) and intended to be in close contact with the body (30) of the male part (3) on the side of its free end (33) once engaged and retained.

2. The connector according to claim 1, **characterised in that** the removable locking part (4) is sandwiched between the male and female parts (2, 3), and is of rapid separation, in particular detachable from the connector by pulling, in particular by a single pulling gesture.

3. The connector according to claim 1 or 2, **characterised in that** the locking part (4) is mounted around the male part (3), having an annular shape, preferably the locking part (4) is flexible, in particular flexible and annular in shape with a partially open circumference to ensure its detachment by pulling.

4. The connector according to any one of the preceding claims, **characterised in that** the locking part (4) includes a hollow internal section of geometry and of dimension adapted to the external geometry and to the dimension of the portion of the body (30) of the male part (3) on which it is attached.

5. The connector according to any one of the preceding claims, **characterised in that** the locking part (4) includes a gripping means (41), in particular the locking part (4) is of annular shape and includes as gripping means a radial direction lug projecting outwardly from the annular circumference.

6. The connector according to any one of the preceding claims, **characterised in that** the locking part (4) is a part serving as a spacer between the male part (3) and the female part (2) to provide an external space between the male part and the female part when the male part is in the position held in the female part and the locking part is removed.

7. The connector according to any one of the preceding claims, **characterised in that** the female (2) and male (3) parts include mutual electrical connection means.

8. The connector according to any one of the preceding claims, **characterised in that** the ring (24) is made of a flexible material capable of spreading.

9. The connector according to any one of the preceding claims, **characterised in that** the housing (20) for the male part comprises an inlet from which the male part (3) is intended to be inserted, a free space (26) being reserved between the male part and the end of the housing opposite the inlet of the housing when the male part is in the assembled position and held in the housing.

10. A method for implementing an electrical connector according to any one of the preceding claims, **characterised in that** the steps of assembling the female and male parts (2, 3) include:
- the positioning of the locking part (4) on the male part (3) before the total insertion of said male part (3) in the female part (2),
- the insertion of the male part (3) in the female part (2) until the mutual cooperation of the retaining means,
- the abutment of the end (33) of the male part (3) against the elastic ring (24) projecting in the housing (20) of the female part (2),
- the movement of the ring (24) from the first rest position to the second retracted position by contact between the end of the male part (3) and the convergent inclination of the inner profile of the ring (24),
- the movement of the ring (24) from the second retracted position to the first rest position,
the ring (24) being housed in the peripheral groove (35) and **in that** the disassembly steps include:
- the removal of the locking part (4) from the connector, preferably by a single pulling gesture,
- the disengagement of the retaining means (34, 24) by a double push-pull action, and
- the extraction of the male part (3) out of the female part (2) in particular by pulling.
